# EUROPEAN PATENT APPLICATION

(11) **EP 4 495 043 A1**
(43) Date of publication of application: **22.01.2025**
(21) Application number: 22932155.9
(22) Date of filing: 18.03.2022
(51) Int. Cl.: B66B 11/04, B66B 11/08

(54) **HOIST AND ELEVATOR**

(71) Applicant: Hitachi, Ltd., Tokyo 100-8280 (JP)
(72) Inventor: NAKAYAMA Masato, Tokyo 101-8941 (JP)
(74) Representative: MERH-IP Matias Erny Reichl Hoffmann Patentanwälte PartG mbB
(86) International application number: PCT/JP2022/012556
(87) International publication number: WO 2023/175882

(57) **Abstract**

Provided are a hoist and an elevator capable of stabilizing a cooling effect. The hoist comprises a housing provided with a plurality of stators, a main shaft supported by the housing, and a rotating solid that is supported by the main shaft and that rotates with respect to the housing. The rotating solid has a boss portion fitted to the main shaft, a rotating plate portion, a peripheral wall portion, and a plurality of ribs. The rotating plate portion has an intake hole for taking air from the outside to the housing side. The housing has an exhaust hole located outside the intake hole in the radial direction of the main shaft. At a corner formed by the inner surface of the rotating plate portion and the inner peripheral surface of the peripheral wall portion, there is formed an air guide portion, which is a curved surface that guides the air entering the housing from the intake hole toward the stators.

## Description

### Technical Field

The present invention relates to a hoist and an elevator.

### Background Art

A hoist for an elevator has been required to be downsized in recent years. A downsized hoist reduces the heat dissipation area of a motor. On the other hand, a hoist with an improved output increases the amount of heat generation. Thus, a downsized hoist causes a problem in stabilizing motor performance. Accordingly, a hoist that sends cooling air between a rotor and a stator is considered (see Patent Literature 1). The hoist described in Patent Literature 1 includes a blower blade on an end surface of a rotor. This causes the wind traveling in a rotation axis direction of the rotor with the rotation of the rotor to flow between the rotor and the stator.

### Citation List

### Patent Literature

Patent Literature 1: JP 2016-220370 A

### Summary of Invention

### Technical Problem

However, in the hoist described in Patent Literature 1, the cooling air that has passed through the rotor travels substantially perpendicularly to an inner wall plane of a housing. This causes the cooling air that has passed through the rotor to stagnate in the closed space inside the housing. As a result, there arises a problem that the cooling air does not flow efficiently and the cooling effect is not stable.

It is conceivable to provide a through hole for cooling air on the inner wall plane of the housing. However, the cooling air that has flowed through the rotor on the rotating body side passes through the through hole in the housing on the stationary portion side. Thus, the cooling air does not flow efficiently.

An object of the present invention is to provide a hoist and an elevator capable of stabilizing a cooling effect in consideration of the above problems.

### Solution to Problem

To solve the above problems and achieve the object, a hoist includes a housing provided with a plurality of stators, a main shaft supported by the housing, and a rotating body supported by the main shaft. The rotating body includes a sheave around which a main rope is wound and a rotor facing the plurality of stators, and the rotating body rotates with respect to the housing. The rotating body has a boss portion fitted to the main shaft, a rotating plate portion, a peripheral wall portion, and a plurality of ribs. The rotating plate portion is formed in a ring shape continuous with an outer peripheral portion of the boss portion and concentric with the main shaft. The peripheral wall portion protrudes from the outer periphery of the rotating plate portion toward the housing. The plurality of ribs are provided on an inner surface that is a surface of the rotating plate portion on the housing side, and are radially disposed around the boss portion. The rotating plate portion has an intake hole for taking air from the outside to the housing side. The housing has an exhaust hole located outside the intake hole in the radial direction of the main shaft. An air guide portion that is a curved surface for guiding air entering the housing side from the intake hole to the stator side is formed at a corner portion formed by an inner surface of the rotating plate portion and an inner peripheral surface of the peripheral wall portion.

An elevator includes a car, a counterweight linked to the car via a main rope, and the hoist around which the main rope is wound.

### Advantageous Effects of Invention

The hoist and the elevator having the above configuration can stabilize the cooling effect.

Problems, configurations, and effects other than those described above will be clarified by the following description of embodiments.

### Brief Description of Drawings

Fig. 1 is an overall configuration diagram of an elevator according to a first embodiment.
Fig. 2 is a longitudinal sectional view of a hoist according to the first embodiment.
Fig. 3 is a perspective view illustrating a main part of a rotating body in the hoist according to the first embodiment.
Fig. 4 is a longitudinal sectional view of a hoist according to a second embodiment.
Fig. 5 is a perspective view illustrating a main part of a housing in the hoist according to the second embodiment.

### Description of Embodiments

Hereinafter, embodiments of the present invention will be described in detail with reference to the drawings. In the present specification and the drawings, elements having substantially the same function or configuration are denoted by the same reference numerals, and redundant description is omitted.

### 1. First Embodiment

### [Elevator]

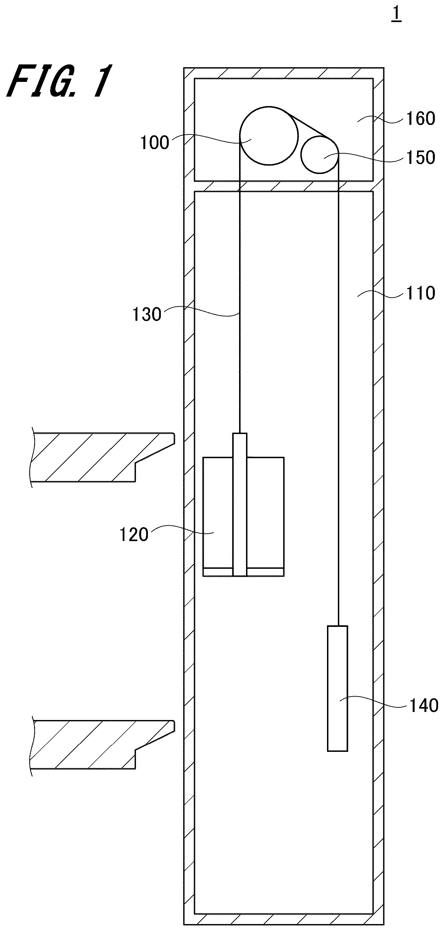

First, a configuration of an elevator according to a first embodiment of the present invention will be described with reference to Fig. 1.

Fig. 1 is an overall configuration diagram of an elevator according to the first embodiment.

As illustrated in Fig. 1, an elevator 1 is installed in a hoistway 110 formed in a building structure. The elevator 1 includes a car 120 on which people and luggage are to be loaded, a main rope 130, a counterweight 140, and a hoist 100. A machine room 160 is provided at the top of the hoistway 110.

The hoist 100 is disposed in the machine room 160. The main rope 130 is wound around the hoist 100. The hoist 100 is a device that winds up the main rope 130 to raise and lower the car 120. A diverting pulley 150 is provided near the hoist 100. The main rope 130 is loaded on the diverting pulley 150.

The car 120 is formed in a substantially hollow rectangular parallelepiped shape. The car 120 is linked to the counterweight 140 via the main rope 130. When the hoist 100 winds up the main rope 130, the car 120 and the counterweight 140 lift and lower in opposite directions.

The mass of the counterweight 140 is set to be substantially the same as the mass of the car 120 with no load. Thus, when the car 120 is with no load, the tension ratio between the main rope 130 on the car 120 side and the main rope 130 on the counterweight 140 side is 1. This makes it possible to suppress the output of the hoist 100 at the time of no load.

### [Hoist]

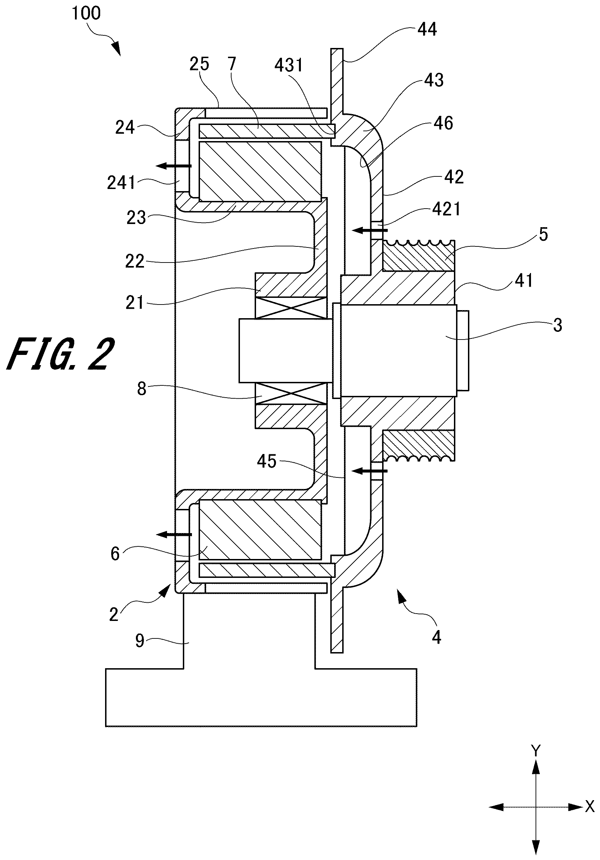

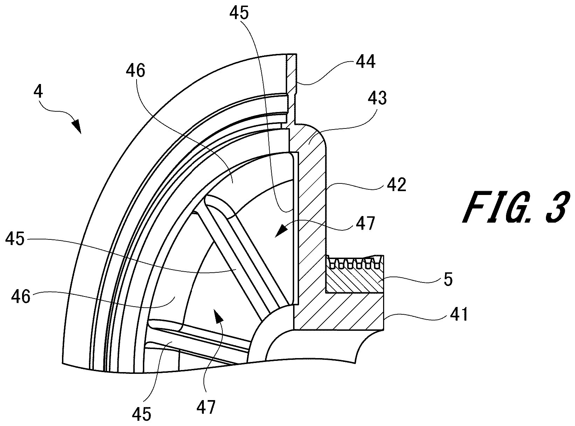

Next, a configuration of the hoist 100 will be described with reference to Figs. 2 and 3.

Fig. 2 is a longitudinal sectional view of the hoist 100. Fig. 3 is a perspective view illustrating a main part of a rotating body in the hoist 100.

As illustrated in Fig. 2, the hoist 100 includes a housing 2, a main shaft 3, a rotating body 4, a sheave 5, a plurality of stators 6, a rotor 7, and a bearing 8. The rotating body 4 is rotatably supported by the housing 2 via the main shaft 3 and the bearing 8. The plurality of stator 6 disposed in an annular shape are attached to the housing 2. The rotor 7 having an annular shape is attached to the rotating body 4. The rotor 7 is disposed on the outer side with respect to the plurality of stators 6 in a radial direction. That is, the hoist 100 is an outer rotor type hoist.

In the following description, an axial direction of the main shaft 3 is referred to as an X direction. A vertical direction with respect to the axial direction of the main shaft 3 and a lifting and lowering direction of the car 120 is defined as a Y direction. A direction orthogonal to the X direction and the Y direction is defined as a Z direction. The housing 2 and the rotating body 4 face each other in the X direction. Further, in the X direction, the rotating body 4 side is defined as one side. In the X direction, the housing 2 side is defined as the other side.

### (Housing)

As illustrated in Fig. 2, the housing 2 is supported by a support base 9. The support base 9 is fixed to the machine room 160 (see Fig. 1) provided in an upper portion of the hoistway 110. The housing 2 faces the rotating body 4 in the X direction.

The housing 2 includes a shaft support portion 21 that rotatably supports the main shaft 3 via the bearing 8, a stator mounting portion 23 to which the plurality of stators 6 are attached, and a first connection portion 22 that connects the shaft support portion 21 and the stator mounting portion 23. The housing 2 includes an outer wall portion 25 covering an outer peripheral portion of the rotating body 4, and a second connection portion 24 connecting the stator mounting portion 23 and the outer wall portion 25.

The shaft support portion 21 is positioned at a substantially central portion on the YZ plane of the housing 2. The shaft support portion 21 is formed in a cylindrical shape with the X direction as an axial direction. The stator mounting portion 23 is formed in a cylindrical shape with the X direction as an axial direction. An inner diameter of the stator mounting portion 23 is larger than an outer diameter of the shaft support portion 21. The stator mounting portion 23 is positioned on the outer side with respect to the shaft support portion 21 in a radial direction.

The first connection portion 22 is formed of an annular plate body. The plane of the first connection portion 22 is substantially orthogonal to the X direction. The inner peripheral side of the first connection portion 22 is continuous with an end portion on one side of the shaft support portion 21 in the X direction. The outer peripheral side of the first connection portion 22 is continuous with an end portion on one side of the stator mounting portion 23 in the X direction.

The outer wall portion 25 is formed in a cylindrical shape with the X direction as an axial direction. An inner diameter of the outer wall portion 25 is larger than an outer diameter of the stator mounting portion 23. The outer wall portion 25 is positioned on the outer side with respect to the stator mounting portion 23 in a radial direction. The inner peripheral portion of the outer wall portion 25 and the outer peripheral portion of the stator mounting portion 23 face each other with a predetermined distance therebetween in the radial direction. The plurality of stators 6 and the rotor 7 are disposed in a space between the outer wall portion 25 and the stator mounting portion 23.

The second connection portion 24 is formed of an annular plate body. The plane of the second connection portion 24 is substantially orthogonal to the X direction. The inner peripheral side of the second connection portion 24 is continuous with an end portion on the other side of the stator mounting portion 23 in the X direction. The outer peripheral side of the second connection portion 24 is continuous with an end portion on the other side of the outer wall portion 25 in the X direction. A plurality of exhaust holes 241 are formed in the second connection portion 24. The plurality of exhaust holes 241 face a gap between the plurality of stators 6.

### (Main Shaft)

The main shaft 3 is formed in a columnar shape with the X direction as an axial direction. The other side of the main shaft 3 in the X direction is rotatably supported by the housing 2 via the bearing 8. The rotating body 4 is fitted to one side of the main shaft 3 in the X direction.

### (Bearing)

The bearing 8 is attached to an inner peripheral portion of the shaft support portion 21. The bearing 8 is formed in an annular shape. The rotating body 4 engages with the bearing 8. The rotating body 4 is rotatably supported by the main shaft 3 via the bearing 8.

### (Rotating Body)

The rotating body 4 includes a boss portion 41 fitted to one side of the main shaft 3, a rotating plate portion 42 continuous with an outer peripheral portion of the boss portion 41, a peripheral wall portion 43 protruding from the outer peripheral portion of the rotating plate portion 42 toward the housing 2, and a flange portion 44 continuous with the peripheral wall portion 43.

The boss portion 41 is provided at a substantially central portion on the YZ plane of the rotating body 4. The boss portion 41 is formed in a cylindrical shape with the X direction as an axial direction. The sheave 5 is attached to an outer peripheral portion of the boss portion 41.

The rotating plate portion 42 is continuous with an intermediate portion of the boss portion 41 in the X direction. The rotating plate portion 42 is formed in a ring shape concentric with the boss portion 41 (main shaft 3). The surface of the rotating plate portion 42 facing one side in the X direction is an outer surface facing the outside of the hoist 100. On the other hand, the surface of the rotating plate portion 42 facing the other side in the X direction is an inner surface facing the inside of the hoist 100 (housing 2 side). The end surface of the sheave 5 on the other side in the X direction abuts on the outer surface of the rotating plate portion 42.

The rotating plate portion 42 is provided with a plurality of intake holes 421. The plurality of intake holes 421 are arranged along a circumferential direction of the main shaft 3 (rotating plate portion 42). In the radial direction of the main shaft 3, the plurality of intake holes 421 are disposed closer to the main shaft 3 than the plurality of exhaust holes 241 of the housing 2. In other words, in the radial direction of the main shaft 3, the plurality of exhaust holes 241 are disposed on the outer side with respect to the plurality of intake holes 421. The plurality of intake holes 421 take air from the outside of the hoist 100 into the inside of the hoist 100 (housing 2 side).

A plurality of ribs 45 are formed on the inner surface of the rotating plate portion 42. The plurality of ribs 45 are radially disposed around the boss portion 41 (see Fig. 3). The plurality of ribs 45 are arranged at equal angular intervals in the circumferential direction around the boss portion 41. The plurality of ribs 45 extend in the radial direction of the rotating plate portion 42. One end of each rib 45 is continuous with the boss portion 41. The other end of each rib 45 is continuous with the inner peripheral surface of the peripheral wall portion 43.

The height of the plurality of ribs 45 (the height from the inner surface of the rotating plate portion) is lower than the height of the inner peripheral surface of the peripheral wall portion 43. The height of the plurality of ribs 45 is higher than a half of the height of the inner peripheral surface of the peripheral wall portion 43. The plurality of intake holes 421 described above is formed one by one between the ribs 45 adjacent in the circumferential direction.

The peripheral wall portion 43 is formed in a cylindrical shape with the X direction as an axial direction. The inner diameter of the peripheral wall portion 43 is larger than the outer diameter of the boss portion 41. The peripheral wall portion 43 is positioned on the outer side with respect to the boss portion 41 in the radial direction (see Fig. 2). An end portion on one side of the peripheral wall portion 43 in the X direction is continuous with the inner surface of the rotating plate portion 42.

A rotor fixing groove 431 for attaching the rotor 7 is provided on the end surface on the other side of the peripheral wall portion 43 in the X direction. The rotor fixing groove 431 is formed in an annular shape along the circumferential direction of the peripheral wall portion 43. The rotor 7 fits into the rotor fixing groove 431.

The flange portion 44 is formed of a plate body protruding outward in the radial direction of the main shaft 3 from the end portion on the other side of the peripheral wall portion 43 in the X direction. The flange portion 44 faces a gap between the stator 6 attached to the housing 2 and the rotor 7 attached to the peripheral wall portion 43 in the X direction. Thus, when viewed from one side in the X direction, the gap between the stator 6 and the rotor 7 is covered by the flange portion 44.

As illustrated in Fig. 3, a plurality of spaces surrounded by the ribs 45, the boss portion 41, and the peripheral wall portion 43 are formed on the inner surface side of the rotating plate portion 42. The plurality of spaces are air passages 47 through which air taken in from the plurality of intake holes 421 passes.

An air guide portion 46 is formed at a corner portion formed by the inner surface of the rotating plate portion 42 and the inner peripheral surface of the peripheral wall portion 43. The air guide portion 46 is a curved surface for guiding the air entering the inner side of the hoist 100 (housing 2 side) from the plurality of intake holes 421 and passing through the air passage 47 to the stator 6 side. The air guide portion 46 is formed up to the height of the rib 45.

The air guide portion 46 is formed axially symmetrically with respect to a center line of the boss portion 41. The air guide portion 46 smoothly continues to the inner surface of the rotating plate portion 42 and the inner peripheral surface of the peripheral wall portion 43. The shape of a longitudinal section (section parallel to the XY plane) of the air guide portion 46 is formed in, for example, an arc. In this case, the central angle of the arc is set within 90 degrees. The shape of the longitudinal section of the air guide portion 46 is not limited to an arc, and it may be a curved surface whose curvature is gradually changed.

The height of the air guide portion 46 may be equal to or higher than a half of the height of the inner peripheral surface of the peripheral wall portion 43. This makes it possible to efficiently direct the air passing through the air passage 47 toward the stator 6. Then, the air in the air passage 47 can be prevented from stagnating. For the efficiency of guiding the air to the stator 6 side and reducing the stagnation of the air, the air guide portion 46 is preferably formed on the entire inner peripheral surface of the peripheral wall portion 43.

### (Sheave)

The sheave 5 is formed in a cylindrical shape with the X direction as an axial direction. The sheave 5 is fitted to an outer peripheral portion on one side of the boss portion 41 in the X direction. The end surface on the other side of the sheave 5 in the X direction abuts on the outer surface of the rotating plate portion 42. The plurality of intake holes 421 of the rotating plate portion 42 are provided at positions not overlapping with the sheave 5 when viewed from the X direction.

The end surface on one side of the sheave 5 in the X direction forms the same plane as the end surface on one side of the boss portion 41 in the X direction. A plurality of grooves around which the main rope 130 is wound are formed on an outer peripheral surface of the sheave 5. The sheave 5 rotates together with the boss portion 41.

### (Stator)

The plurality of stators 6 are attached to an outer peripheral portion of the stator mounting portion 23 in the housing 2. The plurality of stators 6 are arranged at predetermined intervals along the circumferential direction of the stator mounting portion 23 (main shaft 3). Each stator 6 includes an iron core and a coil wound around the iron core.

As described above, the plurality of exhaust holes 241 provided in the housing 2 face the gap between the plurality of stators 6. Thus, the air that has entered the inner side of the hoist 100 from the intake hole 421 of the rotating body 4 is exhausted to the outside of the hoist 100 from the plurality of exhaust holes 241 mainly through the gap between the plurality of stators 6.

### (Rotor)

The rotor 7 is fixed to the rotor fixing groove 431 of the peripheral wall portion 43. The rotor 7 is formed in a cylindrical shape with the X direction as an axial direction. The rotor 7 is a magnetic body. The rotor 7 faces the plurality of stators 6 with an air gap interposed therebetween in the radial direction of the stator mounting portion 23 (main shaft 3).

### (Intake Hole)

The plurality of intake holes 421 provided in the rotating body 4 are holes for taking air from the outer surface side to the inner surface side of the rotating plate portion 42. Each of the plurality of intake holes 421 is formed in a circular shape. The plurality of intake holes 421 are disposed on the circumference of a circle having a first radius R1 about the rotation axis of the main shaft 3. The plurality of intake holes 421 are disposed one by one between the ribs 45 adjacent to each other in the circumferential direction of the main shaft 3.

Each intake hole 421 is positioned on the boss portion 41 side in the air passage 47 described above. The distance R1 from the center of the main shaft 3 to the intake hole 421 is shorter than a distance R2 from the center of the main shaft 3 to the exhaust hole 241. The plurality of intake holes 421 do not overlap with the plurality of exhaust holes 241 when viewed from the axial direction of the main shaft 3.

### (Exhaust Hole)

The plurality of exhaust holes 241 provided in the housing 2 are holes for exhausting air to the opposite side of the housing 2 from the rotating body 4. The plurality of exhaust holes 241 are disposed on the circumference of a circle having a second radius R2 about the rotation axis of the main shaft 3. The plurality of exhaust holes 241 face the gap between the plurality of stators 6. The distance R2 from the center of the main shaft 3 to the exhaust hole 241 is larger than the distance R1 from the center of the main shaft 3 to the intake hole 421.

The shapes of the plurality of exhaust holes 241 are not particularly limited. The plurality of exhaust holes 241 may be formed in, for example, a rectangular slit shape or formed to have a circular diameter similar to that of the intake hole 421. The plurality of exhaust holes 241 may have the same shape as the shape of the gap between the plurality of stators 6.

In the hoist 100 having such a configuration, when the rotating body 4 rotates, air outside the hoist 100 is sucked from the plurality of intake holes 421. Then, the air sucked from the plurality of intake holes 421 passes through the inside of the hoist 100 and is exhausted from the plurality of exhaust holes 241. With this configuration, the plurality of stators 6 and the like of the hoist 100 are cooled.

### [Cooling Action of Hoist]

Next, a cooling action of the hoist 100 will be described. When the rotating body 4 rotates, a centrifugal force acts on the air in the air passage 47 on the inner surface side of the rotating plate portion 42. This causes air to move from the boss portion 41 side toward the peripheral wall portion 43 in the air passage 47. This movement of air occurs along the extending direction of the plurality of ribs 45.

When air moves in the air passage 47, the pressure on the boss portion 41 side decreases in the air passage 47. This generates a difference in air pressure between the outer surface side and the inner surface side of the rotating plate portion 42. That is, the air pressure in the vicinity of the plurality of intake holes 421 on the inner surface side of the rotating plate portion 42 becomes a negative pressure with respect to the air pressure on the outer surface side of the rotating plate portion 42. As a result, air is sucked into the hoist 100 from the plurality of intake holes 421.

On the other hand, the air flowing in the direction away from the boss portion 41 in the air passage 47 is guided by the air guide portion 46 to the housing 2 side (plurality of stators 6 side). As a result, the air flowing through the air passage 47 passes between the rotor 7 and the plurality of stators 6 or between the adjacent stators 6, and flows to the second connection portion 24 side of the housing 2.

Then, in the vicinity of the plurality of exhaust holes 241 of the second connection portion 24, air flows in from the rotating body 4 side, whereby the air pressure increases. This generates a difference in air pressure between the outer surface side and the inner surface side of the second connection portion 24. That is, when the rotating body 4 rotates, the air pressure in the vicinity of the plurality of exhaust holes 241 on the inner surface side of the second connection portion 24 becomes a positive pressure with respect to the air pressure on the outer surface side of the second connection portion 24. As a result, the air in the hoist 100 is exhausted from the plurality of exhaust holes 241.

In this manner, in the present embodiment, with the rotation of the rotating body 4, the pressure in the vicinity of the plurality of intake holes 421 of the rotating plate portion 42 becomes a negative pressure with respect to the outside air, and the pressure in the vicinity of the plurality of exhaust holes 241 of the housing 2 becomes a positive pressure with respect to the outside air. Thus, while the rotating body 4 is rotating, cooling air can always flow into the hoist 100.

The pressure distribution of the air in the vicinity of the plurality of intake holes 421 and in the vicinity of the plurality of exhaust holes 241 does not depend on the rotation direction of the rotating body 4. That is, the same pressure distribution occurs regardless of whether the rotation direction of the rotating body 4 is clockwise or counterclockwise. Thus, the hoist 100 can cause stable cooling air to flow inside regardless of the rotation direction of the rotating body 4.

In the present embodiment, the air guide portion 46 is provided at the corner portion formed by the inner surface of the rotating plate portion 42 and the inner peripheral surface of the peripheral wall portion 43. This makes it possible to efficiently direct the air moving toward the peripheral wall portion 43 because of the action of the centrifugal force toward the housing 2. Further, the air can be prevented from stagnating in the air passage 47. As a result, the cooling effect can be stabilized.

In the present embodiment, the plurality of exhaust holes 241 face the gap between the adjacent stators 6. This makes it possible to efficiently exhaust the air heated by flowing between the adjacent stators 6. As a result, the cooling effect of the stator 6 can be enhanced.

In the present embodiment, the plurality of ribs 45 are arranged at equal angular intervals in the circumferential direction around the boss portion 41. This causes the amount of air flowing through each air passage 47 to be equal. As a result, air can uniformly flow from the boss portion 41 side to the peripheral wall portion 43 side. Thus, the plurality of stators 6 can be uniformly cooled.

### 2. Second Embodiment

### [Hoist]

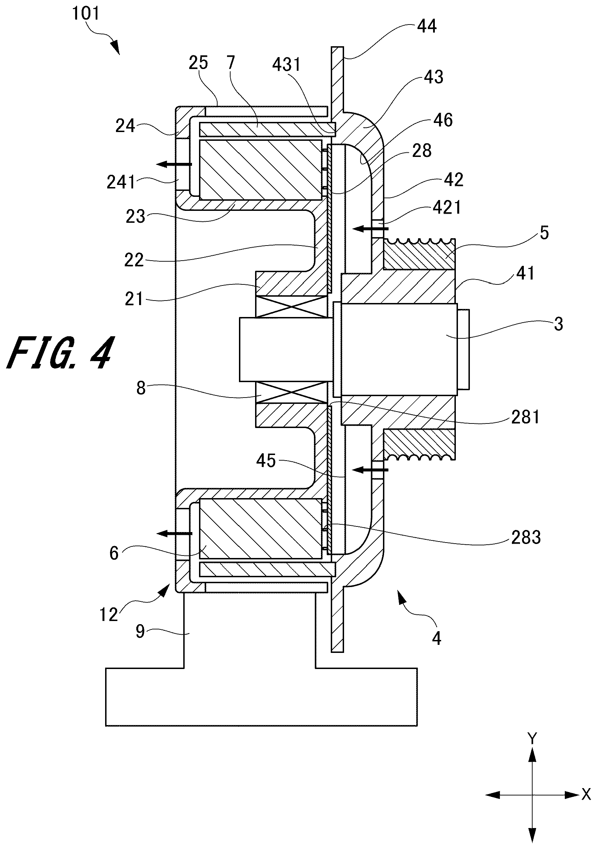

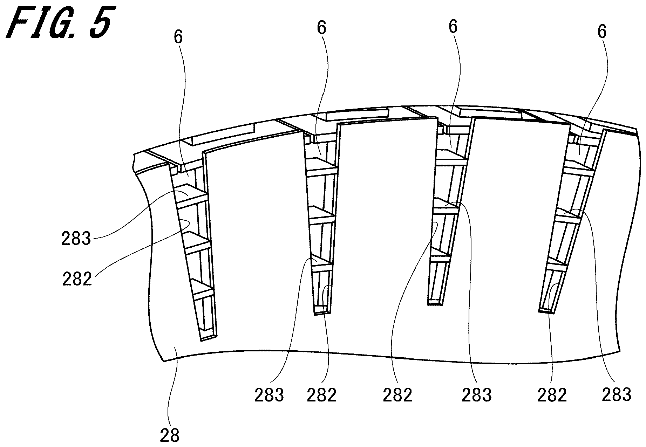

Next, a hoist according to a second embodiment of the present invention will be described with reference to Figs. 4 and 5.

Fig. 4 is a longitudinal sectional view of a hoist according to the second embodiment. Fig. 5 is a perspective view illustrating a main part of a housing in the hoist according to the second embodiment.

As illustrated in Fig. 4, a hoist 101 according to the second embodiment has the same configuration as the hoist 100 (see Fig. 2) according to the first embodiment. The hoist 101 is different from the hoist 100 in that a straightening plate 28 is provided. Therefore, here, the straightening plate 28 will be described. The same components of the hoist 101 as those of the hoist 100 are denoted by the same reference numerals, and the description thereof will be omitted.

The hoist 101 includes a housing 12, the main shaft 3, the rotating body 4, the sheave 5, the plurality of stators 6, the rotor 7, and the bearing 8. The rotating body 4 is rotatably supported by the housing 12 via the main shaft 3 and the bearing 8.

### (Housing)

As illustrated in Fig. 4, the housing 12 includes the shaft support portion 21, the first connection portion 22, the stator mounting portion 23, the second connection portion 24, the outer wall portion 25, and the straightening plate 28. The straightening plate 28 is attached to an end surface on one side of the shaft support portion 21 in the X direction and a plane on one side of the first connection portion 22.

The straightening plate 28 is formed in a disk shape. A through hole 281 for avoiding interference with the main shaft 3 is provided in a central portion of the straightening plate 28. The center of the straightening plate 28 coincides with the center of the main shaft 3. The straightening plate 28 is set to a size facing the plurality of stators 6. The straightening plate 28 is set to a size in which the outer peripheral portion does not interfere with the rotating body 4 or the rotor 7.

As illustrated in Fig. 5, a plurality of passing holes 282 are provided in a region of the straightening plate 28 facing the plurality of stators 6. The air guided toward the plurality of stators 6 by the air guide portion 46 passes through the plurality of passing holes 282. The plurality of passing holes 282 face gaps between the plurality of stators 6. This makes it possible to efficiently direct the air guided toward the plurality of stators 6 by the air guide portion 46 to the gap between the plurality of stators 6. As a result, the plurality of stators 6 can be efficiently cooled.

The plurality of passing holes 282 are arranged along a radial direction of the straightening plate 28. This makes it possible to cause the plurality of passing holes 282 to face the gap between the plurality of stators 6. The plurality of passing holes 282 are arranged along a circumferential direction of the straightening plate 28. Each of the plurality of passing holes 282 is formed in a substantially quadrangular shape. The plurality of passing holes 282 increase in size toward the outside in the radial direction. This makes it possible to increase the amount of air flowing toward the gap between the plurality of stators 6.

Out of the plurality of passing holes 282, the one positioned on the outermost side in the radial direction is open to the outer edge of the straightening plate 28. This makes it possible to prevent a thin plate piece which is easily damaged from being formed on the outer peripheral portion of the straightening plate 28. As a result, it is possible to increase the yield in the production of the hoist 101.

Passing holes at the same position in the radial direction of the straightening plate 28 among the plurality of the passing holes 282 are set to have the same size. This makes it possible to unify the amount of air passing through the gap between the plurality of stators 6. As a result, unevenness can be prevented from occurring in the cooling effect of the plurality of stators 6.

The straightening plate 28 is provided with a plurality of fins 283. The plurality of fins 283 are formed in a substantially quadrangular plate shape. The plurality of fins 283 protrude substantially perpendicularly from the side of the plurality of passing holes 282 intersecting with the radial direction of the straightening plate. The plurality of fins 283 protrude toward the plurality of stators 6.

The plurality of fins 283 are formed by providing cutouts in the straightening plate 28 and bending the cutouts. When the plurality of fins 283 are formed, a plurality of passing holes 282 are formed. This makes it possible to easily form the plurality of passing holes 282 and the plurality of fins 283.

The plurality of fins 283 guides the air that has passed through the plurality of passing holes 282 in the axial direction of the main shaft 3. This causes the air that has passed through the plurality of passing holes 282 to advance straight and pass through the gap between the plurality of stators 6. As a result, unevenness can be prevented from occurring in the air passing through the gap between the plurality of stators 6. Thus, the cooling effect can be stabilized.

### 3. Summary

As described above, the hoist 100 of the above-described embodiment includes the housing 2 provided with the plurality of stators 6, the main shaft 3 supported by the housing 2, and the rotating body 4 supported by the main shaft 3. The rotating body 4 includes the sheave 5 around which the main rope 130 is wound, and the rotor 7 facing the plurality of stators 6, and the rotating body 4 rotates with respect to the housing 2. The rotating body 4 includes the boss portion 41 fitted to the main shaft 3, the rotating plate portion 42, the peripheral wall portion 43, and the plurality of ribs 45. The rotating plate portion 42 is formed in a ring shape continuous with an outer peripheral portion of the boss portion 41 and concentric with the main shaft 3. The peripheral wall portion 43 protrudes from the outer periphery of the rotating plate portion 42 toward the housing 2. The plurality of ribs 45 are provided on an inner surface that is a surface of the rotating plate portion 42 on the housing 2 side, and are radially disposed around the boss portion 41. The rotating plate portion 42 has the intake hole 421 for taking air from the outside to the housing 2 side. The housing 2 has the exhaust hole 241 disposed on the outer side with respect to the intake hole 421 in a radial direction of the main shaft 3. An air guide portion 46 that is a curved surface for guiding air entering the housing 2 side from the intake hole 421 to the stator 6 side is formed at a corner portion formed by the inner surface of the rotating plate portion 42 and the inner peripheral surface of the peripheral wall portion 43.

With this configuration, when the rotating body 4 rotates, the air taken in from the intake hole 421 moves toward the peripheral wall portion 43 because of the action of the centrifugal force. The air guide portion 46 can direct the air moving toward the peripheral wall portion 43 toward the stator 6. As a result, the cooling effect can be stabilized.

The air guide portion 46 of the hoist 100 in the above-described embodiment is formed to reach a height equal to or higher than a half the height of the inner peripheral surface of the peripheral wall portion 43.

This makes it possible to efficiently direct the air moving toward the peripheral wall portion 43 toward the stator 6.

The air guide portion 46 of the hoist 100 in the above-described embodiment is formed to reach the height of the plurality of ribs 45 or higher.

This makes it possible to efficiently direct the air moving toward the peripheral wall portion 43 along the plurality of ribs 45 toward the stator 6.

The air guide portion 46 of the hoist 100 in the above-described embodiment is formed on the entire inner peripheral surface of the peripheral wall portion 43.

This makes it possible to efficiently direct the air moving toward the peripheral wall portion 43 toward the stator 6.

The hoist 101 in the above-described embodiment further includes the straightening plate 28 disposed between the rotating plate portion 42 and the plurality of stators 6. The straightening plate 28 includes a plurality of passing holes 282 through which the air guided to the air guide portion 46 passes.

This makes it possible to direct the air guided toward the plurality of stators 6 by the air guide portion 46 to a predetermined portion related to the plurality of stators 6.

The plurality of stators 6 of the hoist 101 in the above-described embodiment are arranged at predetermined intervals in the circumferential direction of the main shaft 3. The plurality of passing holes 282 of the straightening plate 28 face the gap between the plurality of stators 6.

This makes it possible to efficiently direct the air guided toward the plurality of stators 6 by the air guide portion 46 to the gap between the plurality of stators 6. As a result, the plurality of stators 6 can be efficiently cooled.

Among the plurality of passing holes 282 of the straightening plate 28 of the hoist 101 in the above-described embodiment, passing holes 282 at the same position in the radial direction of the main shaft 3 (straightening plate 28) are set to the same size.

This makes it possible to unify the amount of air passing through the gap between the plurality of stators 6. As a result, unevenness can be prevented from occurring in the cooling effect of the plurality of stators 6.

The plurality of passing holes 282 of the straightening plate 28 of the hoist 101 in the above-described embodiment are arranged in the radial direction of the main shaft 3 (straightening plate 28).

This makes it possible to cause the plurality of passing holes 282 to face the gap between the plurality of stators 6.

The straightening plate 28 of the hoist 101 in the above-described embodiment includes the fins 283 protruding from the periphery of the plurality of passing holes 282 toward the plurality of stators 6.

This makes it possible to guide the traveling direction of the air that has passed through the plurality of passing holes 282. That is, the air that has passed through the plurality of passing holes 282 advances straight and passes through the gap between the plurality of stators 6. As a result, unevenness can be prevented from occurring in the air passing through the gap between the plurality of stators 6.

The elevator 1 according to the above-described embodiment includes the car 120, the counterweight 140 linked to the car 120 via the main rope 130, and the hoist 100 around which the main rope 130 is wound.

With this configuration, when the rotating body 4 of the hoist 100 rotates, the air taken in from the intake hole 421 moves toward the peripheral wall portion 43 because of the action of the centrifugal force. The air guide portion 46 can direct the air moving toward the peripheral wall portion 43 toward the stator 6. As a result, the cooling effect can be stabilized.

The hoist and the elevator of the present invention have been described above including the function effect thereof. However, the hoist and the elevator of the present invention are not limited to the above-described embodiments, and various modifications can be made without departing from the gist of the invention described in the claims.

In the above-described embodiment, the intake hole 421 is formed in a circular shape. However, the intake hole according to the present invention is not limited to a circular shape, but it can be formed in a rectangular shape or various other shapes. The size of the intake hole according to the present invention is not limited as long as the intake hole does not inhibit the generation of the differential pressure between the inner surface side and the outer surface side of the rotating body due to the centrifugal force caused by the rotation of the rotating body. The size of the intake hole according to the present invention is appropriately set according to the size of the exhaust hole and the like.

In the above-described embodiment, the plurality of ribs 45 radially disposed around the boss portion 41 are arranged at equal angular intervals in the circumferential direction around the boss portion 41. However, the plurality of ribs according to the present invention do not have to be arranged at equal angular intervals in the circumferential direction around the boss portion 41. The shape and disposition of the plurality of ribs according to the present invention can be appropriately set as long as the ribs can guide air flowing from the boss portion 41 side toward the outside in the radial direction. The plurality of ribs 45 arranged at equal angular intervals in the circumferential direction around the boss portion 41 can make the amount of air uniform from the boss portion 41 side toward the outside in the radial direction in each air passage 47. As a result, air can efficiently flow toward the peripheral wall portion 43.

In the embodiments described above, the shape of the plurality of passing holes 282 in the straightening plate 28 is a substantially quadrangular shape. However, the shape of the plurality of passing holes in the straightening plate according to the present invention can be appropriately set to a circular shape, an elliptical shape, a polygonal shape other than a quadrangular shape, or the like.

In the embodiments described above, the plurality of fins 283 of the straightening plate 28 are formed in a substantially quadrangular plate shape. However, the shape is not limited as long as the plurality of fins of the straightening plate according to the present invention have a flat surface that guides the air that has passed through the plurality of passing holes 282 to the stator 6 side. Thus, the shape of the plurality of fins of the straightening plate according to the present invention can be appropriately set.

In the embodiments described above, the elevator 1 in which the machine room 160 is provided in the upper portion of the hoistway 110 has been described as an example. However, the elevator according to the present invention may be a so-called machine room-less elevator not having a machine room.

The embodiments described above have been described in detail in order to clearly describe the present invention, and are not necessarily limited to those having all the described configurations. It is possible to add, delete, and replace other configurations for a part of the configuration of the embodiments.

In the present specification, words such as "parallel" and "orthogonal" are used, but these do not strictly mean only "parallel" and "orthogonal", but they may mean a state of "substantially parallel" or "substantially orthogonal" including "parallel" and "orthogonal" and in a range in which the function can be exhibited.

### Reference Signs List

- 1: elevator
- 2, 12: housing
- 3: main shaft
- 4: rotating body
- 5: sheave
- 6: stator
- 7: rotor
- 8: bearing
- 9: support base
- 21: shaft support portion
- 22: first connection portion
- 23: stator mounting portion
- 24: second connection portion
- 25: outer wall portion
- 28: straightening plate
- 41: boss portion
- 42: rotating plate portion
- 43: peripheral wall portion
- 44: flange portion
- 45: rib
- 46: air guide portion
- 47: air passage
- 100, 101: hoist
- 110: hoistway
- 130: main rope
- 150: diverting pulley
- 160: machine room
- 241: exhaust hole
- 281: through hole
- 282: passing hole
- 283: fin
- 421: intake hole
- 431: rotor fixing groove

## Claims

1. A hoist comprising:
a housing provided with a plurality of stators;
a main shaft supported by the housing; and
a rotating body supported by the main shaft, the rotating body including a sheave around which a main rope is wound and a rotor facing the plurality of stators, the rotating body rotating with respect to the housing, wherein
the rotating body includes:
a boss portion that fits to the main shaft; a rotating plate portion continuous with an outer peripheral portion of the boss portion and formed in a ring shape concentric with the main shaft; a peripheral wall portion protruding from an outer periphery of the rotating plate portion toward the housing; and a plurality of ribs provided on an inner surface that is a surface of the rotating plate portion on the housing side, the plurality of ribs being radially disposed around the boss portion,
the rotating plate portion includes an intake hole through which air is taken from an outside toward the housing,
the housing includes an exhaust hole disposed on an outer side with respect to the intake hole in a radial direction of the main shaft, and
an air guide portion that is a curved surface for guiding air entering the housing side from the intake hole to the stator side is formed at a corner portion formed by an inner surface of the rotating plate portion and an inner peripheral surface of the peripheral wall portion.

2. The hoist according to claim 1, wherein
the air guide portion is formed to reach a height equal to or higher than a half of a height of an inner peripheral surface of the peripheral wall portion.

3. The hoist according to claim 1, wherein
the air guide portion is formed to reach a height equal to or higher than a height of the plurality of ribs.

4. The hoist according to claim 1, wherein
the air guide portion is formed on an entire inner peripheral surface of the peripheral wall portion.

5. The hoist according to claim 1, further comprising
a straightening plate disposed between the rotating plate portion and the plurality of stators and including a plurality of passing holes through which air guided to the air guide portion passes.

6. The hoist according to claim 5, wherein
the plurality of stators are arranged at predetermined intervals in a circumferential direction of the main shaft, and
the plurality of passing holes of the straightening plate face a gap between the plurality of stators.

7. The hoist according to claim 6, wherein
passing holes at a same position in the radial direction of the main shaft among the plurality of passing holes are set to have a same size.

8. The hoist according to claim 6, wherein
the plurality of passing holes are arranged in the radial direction of the main shaft.

9. The hoist according to claim 5, wherein
the straightening plate includes a fin protruding from a periphery of the plurality of passing holes toward the plurality of stators.

10. An elevator comprising:
a car;
a counterweight linked to the car via a main rope; and
a hoist around which the main rope is wound, wherein
the hoist includes:
a housing provided with a plurality of stators;
a main shaft supported by the housing; and
a rotating body supported by the main shaft, the rotating body including a sheave around which the main rope is wound and a rotor facing the stators, the rotating body rotating with respect to the housing,
the rotating body includes:
a boss portion that fits to the main shaft; a rotating plate portion continuous with an outer peripheral portion of the boss portion and formed in a ring shape concentric with the main shaft; a peripheral wall portion protruding from an outer periphery of the rotating plate portion toward the housing; and a plurality of ribs provided on an inner surface that is a surface of the rotating plate portion on the housing side, the plurality of ribs being radially disposed around the boss portion,
the rotating plate portion includes an intake hole through which air is taken from an outside toward the housing,
the housing includes an exhaust hole disposed on an outer side with respect to the intake hole in a radial direction of the main shaft, and
an air guide portion that is a curved surface for guiding air entering the housing side from the intake hole to the stator side is formed at a corner portion formed by an inner surface of the rotating plate portion and an inner peripheral surface of the peripheral wall portion.
